Europäisches Patentamt

European Patent Office

Office européen des brevets

(19)

(11)     EP 0 405 174 B1

(12)                    EUROPEAN PATENT SPECIFICATION

(45) Date of publication and mention
     of the grant of the patent:
     **11.03.1998   Bulletin 1998/11**

(51) Int Cl.⁶: **G06F 15/80**

(21) Application number: **90110384.6**

(22) Date of filing: **31.05.1990**

(54) **Neuronal data processing system and adaptation method therefor**

Neuronales Datenverarbeitungssystem und Anpassungsverfahren

Système neuronal de traitement de données et méthode d'adaptation

(84) Designated Contracting States:
     **BE DE FR GB IT NL SE**

(30) Priority: **02.06.1989   JP   140834/89**
     **03.07.1989   JP   171704/89**
     **12.07.1989   JP   179658/89**
     **29.09.1989   JP   254712/89**
     **29.09.1989   JP   254713/89**
     **29.09.1989   JP   254714/89**

(43) Date of publication of application:
     **02.01.1991   Bulletin 1991/01**

(73) Proprietors:
     • **YOZAN INC.**
       **Tokyo 112 (JP)**
     • **SHARP KABUSHIKI KAISHA**
       **Osaka 545 (JP)**

(72) Inventors:
     • **Takatori, Sunao**
       **Tokyo 112 (JP)**
     • **Kumagai, Ryohei**
       **Tokyo 112 (JP)**
     • **Yamamoto, Makoto**
       **Tokyo 112 (JP)**
     • **Matsumoto, Koji**
       **Tokyo 112 (JP)**

(74) Representative: **Grünecker, Kinkeldey,**
     **Stockmair & Schwanhäusser Anwaltssozietät**
     **Maximilianstrasse 58**
     **80538 München (DE)**

(56) References cited:
     **EP-A- 0 340 742**

     • **AIP CONFERENCE PROCEEDINGS 151,
       NEURAL NETWORKS FOR COMPUTING,
       Snowbird, UT, 1986, pages 404-407, American
       Institute of Physics, New York, US; P. SIBANI:
       "Firing response of a neural model with
       threshold modulation and neural dynamics"**
     • **NEURAL NETWORKS, vol. 1, no. 1, 1988, pages
       17-61, Pergamon Journals Ltd, New York, US; S.
       GROSSBERG: "Nonlinear neural networks:
       Principles, mechanisms, and architectures"**
     • **INFORMATION PROCESSING 71,
       PROCEEDINGS OF THE INTERNATIONAL
       FEDERATION FOR INFORMATION
       PROCESSING, Ljubljana, 23rd - 28th August
       1971, pages 1377-1381, North Holland
       Publishing Co., NL; E.R. CAIANIELLO et al.:
       "Mathematical methods in the study of neural
       systems"**
     • **IEEE INTERNATIONAL CONFERENCE ON
       NEURAL NETWORKS, San Diego, California,
       24th - 27th July 1988, pages I-417 - I-424; P.
       GELBAND et al.: "Neural 'selective' processing
       and learning"**

## Description

The present invention relates to a method for avoiding falling into local minima during learning of a neural network according to the preamble part of claim 1. Such a method is known from EP-A-0 340 742.

On learning process of data processing system of this type, when an adequate input and output correlation at certain level occurs and the correlation is strengthened, data processing system cannot escape from the condition thereafter, as a result, further adaptation becomes impossible. This phenomenon is expressed by "fall into local minimum". Bolzman machines (David H. Ackley, Geoffrey E. Hinton, and Terrence J. Sejnowski: A learning algorithm for Bolzman machines: Cognitive Science 9, 1989, 147-169), for example, focuses on energy formula of neural network;

$$E = - \sum_{i < j} w_{ij} S_i S_j + \sum_i \theta_i S_i \quad (1)$$

This energy is jumped temporarily to predetermined high level so as to escape from a local minimum of above energy formula and reach global minimum. However, optimized correlation of input and output and the condition of global minimum of said energy do not always coincide with each other. In general, since the depth of local minimum is unknown, certainty of escaping from partial local minimum cannot be guaranteed when energy jump level is predetermined. Furthermore, there is no parallelism between the function of organisms and temporal energy jump.

From AIP Conference Proceedings 151, Neural Networks for Computing, Snowbird, UT, 1986, pages 404-407, American Institute of Physics, New York, US; P. Sibani: "Firing response of a neural model with threshold modulation and neural dynamics", adaptively tuning a network by use of a quenching threshold (QT) is known. By increasing or decreasing the QT, the criterion of which activities represent functional signals - and hence should be processed and stored in a short term memory - and of which activities represent functional noise - and hence should be suppressed - can be flexibly modified through time. An increase in QT can cause all but the largest activities to be quenched. Then the network behaves like a choice machine. A sudden decrease in the QT can cause all recently presented input signals to be stored. If a novel or unexpected event suddenly decreases the QT, then all recently presented data can be stored in CAM until the cause of the unexpected event can be determined and learned. This property is considered important in actively regulating the focus of attention of a neural network sensory processor.

It is the object of the present invention to provide an improved method for avoiding falling into local minimum during a learning process.

This object is solved by the subject matter of claims 1 and 2.

Preferred embodiments of the present invention are the subject matter of the dependent claims thereto.

## BRIEF DESCRIPTION OF THE DRAWING

Fig.1 shows a graph describing of the change of standard identification ratio when appropriate learning is performed.

Fig.2 shows a graph describing of the change of standard identification ratio when inappropriate learning is performed.

Fig.3 shows a graph describing of the change of standard identification ratio when dropping to partial local minimal occurred on learning process.

Fig.4 shows a schematic diagram of embodiment of ignition pattern for neural network when it drops to partial local minimal.

Fig.5 shows a graph of the 1st embodiment of threshold change according to the present invention method.

Fig.6 shows a graph of the 2nd embodiment of threshold change according to the present invention method.

Fig.7 shows a graph of the 3nd embodiment of threshold change according to the present invention method.

Fig.8 shows a graph of the 4th embodiment of threshold change according to the present invention method.

Fig.9 shows a graph of the 5th embodiment of threshold change according to the present invention method.

Fig.10 shows a graph of the 6th embodiment of threshold change according to the present invention method.

Fig.11 shows a graph of the 7th embodiment of threshold change according to the present invention method.

Fig.12 shows a graph of the 8th embodiment of threshold change according to the present invention method.

Fig.13 shows a graph of the 9th embodiment of threshold change according to the present invention method.

Fig.14 shows a graph of the 10th embodiment of threshold change according to the present invention method.

Fig.15 shows a graph of the 11th embodiment of threshold change according to the present invention method.

Fig.16 shows a graph of the 12th embodiment of threshold change according to the present invention method.

Fig.17 shows a diagram of the weight change by the 13th embodiment of the present invention;

Fig.18 shows a diagram of weight change by the 14th embodiment.

EP 0 405 174 B1

Fig.19 shows a diagram of weight change by the 15th embodiment.
Fig.20 shows a diagram of weight change by the 16th embodiment.
Fig.21 shows a diagram of weight change by the 17th embodiment.
Fig.22 shows a diagram of weight change by the 18th embodiment.
Fig.23 shows a diagram of weight change by the 19th embodiment.
Fig.24 shows a diagram of weight change by the 20th embodiment.
Fig.25 shows a diagram of weight change by the 21th embodiment.
Fig.26 shows a diagram of weight change by the 22th embodiment.
Fig.27 shows a diagram of weight change by the 23th embodiment.
Fig.28 shows a diagram of weight change by the 24th embodiment.
Fig.29 is a diagram to show the structure of data processing system.
Fig.30 shows a diagram of an embodiment of the initial threshold distribution.
Fig.31 shows a diagram of the 2nd embodiment of the initial threshold distribution.
Fig.32 shows a diagram of the 3rd embodiment in addition to Fig.19 of the initial threshold distribution.
Fig.33 shows a diagram of the 4th embodiment in addition to Fig.19 of the initial threshold distribution.
Fig.34 shows a diagram of the 5th embodiment in addition to Fig.19 of the initial threshold distribution.
Fig.35 shows a diagram of the 6th embodiment in addition to Fig.19 of the initial threshold distribution.
Fig.36 shows a diagram of the 7th embodiment in addition to Fig.19 of the initial threshold distribution.
Fig.37 shows a diagram of the 8th embodiment in addition to Fig.19 of the initial threshold distribution.

**Preferred Embodiment of the Present Invention**

Hereafter, preferred embodiments of the present invention are described with referring to the attached drawings.
Here, standard identification ratio TP is defined as an index for indicating the effect of learning as follows:

$$TP = \frac{\sum_{i<j}^{n} P_{i,j}^{2}}{n}$$

where,

n: number of input phenomena;
i,j: input phenomenon number;
Pi,j: identification ratio (number of bits identified) of neural network output of ith and jth input phenomena.

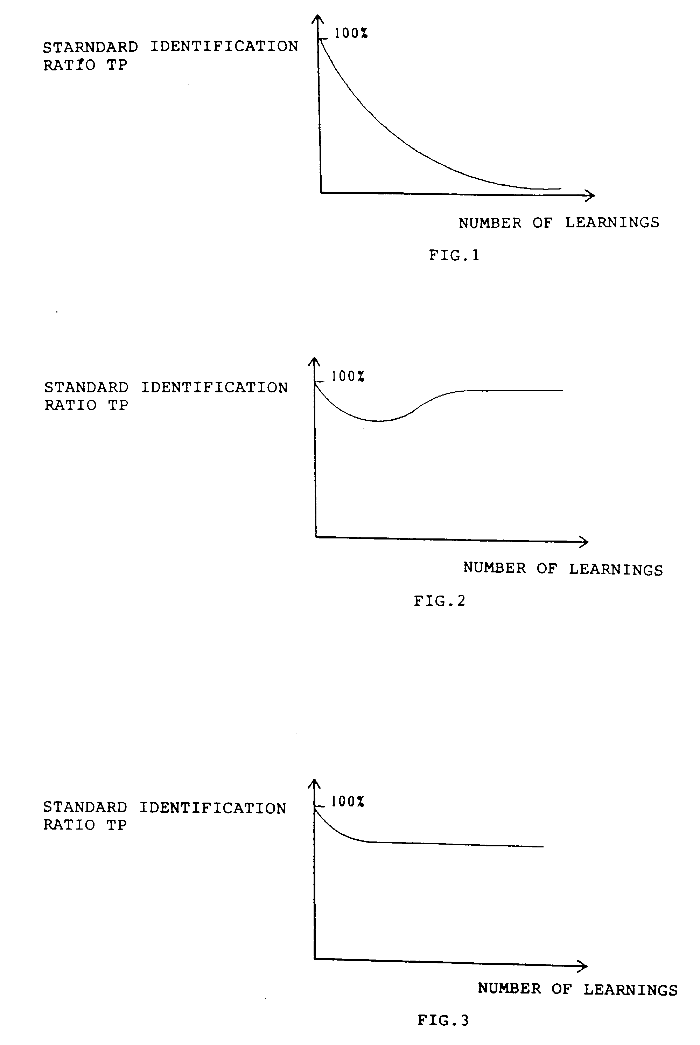

Above standard identification ratio TP is an index of recognition ability for input phenomenon of neural network. The lower the TP is, the higher the recognition ability is. In general, TP=100% for neural network that has not been trained for any leanings. TP monotonously decreases as learning advances.(Fig.1)

However, the learning effect may be deteriorated conversely, when learning method is inappropriate, causing raise of TP that has once been dropped, as shown in Fig.2.

As mentioned above, TP is saturated at a high value when falling into local minimum occurs, as shown in Fig.3.

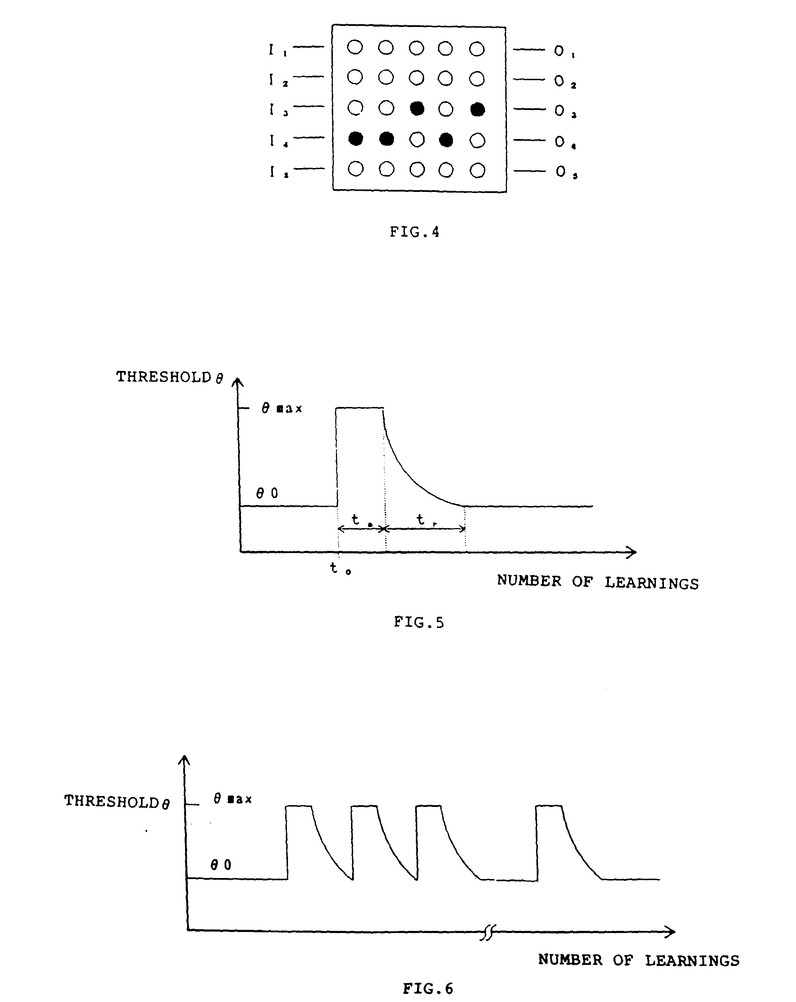

This falling into local minimum is nothing to do with said energy formula(1), and can be considered as the result of learning which strengthen a characteristics of a phenomenon corresponding to a weight distribution with steep deviations. It causes confusion among a plurality of phenomena. This is typically described as shown in Fig.4, in which ignition distribution of neurons is inclined due to strong influence of a input but I4, and it becomes difficult for other neurons to ignite because this condition is strengthened. Here, ignited neurons are shown by black circle in this figure.

In order to improve such condition, it is necessary to strengthen the participation of neurons with respect to other input bits; I1 to I3 and I5.

Here, inventors noticed on absolute and relative refractory period of organism neural network. It is said that these refractory period contribute to restraint and control of stimulation transmissions, according to organism neural network. (Written by Shunichi Amari: A mathematical principal of neural network - information processing manner of neural network- ; Sangyo Tosho)

Contrary to the above, inventors considered these refractory period are factors for changing temporarily the balance of influence for each characteristics of input data, and give change to threshold of neuron that ignites for certain input so as to obtain equivalent effect to absolute and relative refractory period.

Accordingly, threshold θ of neuron which has associatively ignited at a point of time "to" on learning process is raised to the maximal value θ max(for example, to the infinite) for a predetermined period "ta" after the ignition. This corresponds to absolute refractory period. During the absolute refractory period, learning is continued and weight of neuron is changed. Here, neuron whose weight is to be changed is the neuron which does not ignite for the input before "to". After the period "ta", threshold is gradually decreased to value $\theta_o$ at "to". This period of gradual decrease corresponds to relative refractory period and expressed by "tr".

As for absolute refractory period, weight is strengthen for only neuron which did not ignite at "to" and leaning for modification of deviated neuron distribution is performed. On the other hand, in the relative refractory period, balanced amendment learning for total neural network is performed, gradually, with igniting neurons that fired at "to".

As the result, escape from local minimum is realized, and learning is performed to lead standard identification ratio to optimized value (global minimum).

As shown in Fig.6 of embodiment 2, it is effective for escaping from a local minimum to give repetitive changes of the threshold during the refractory period. However, convergence of learning may obstructed, conversely, when too many repetitive changes occur, or when repetitive changes are given toward the end of learning. Therefore, repetitive changes shall be given for appropriate number of times at rather initial period of learning. Furthermore, optimization for period "ta" of absolute refractory period, period "ta" of relative refractory period, and relationship therebetween shall be optimized.

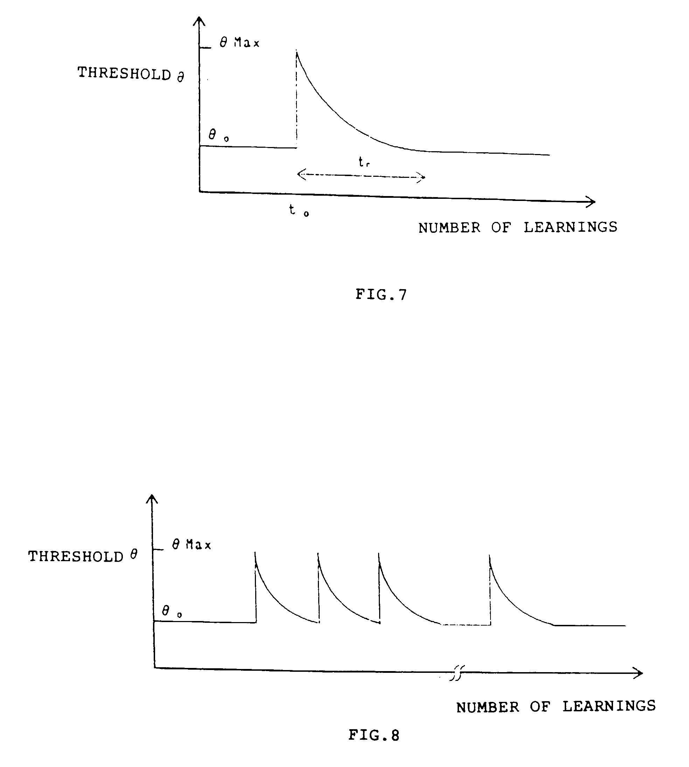

Fig.7 shows the threshold change according to the 3rd embodiment. As for this embodiment, relative refractory period is prepared, whereas absolute refractory period does not exist. That is, threshold θ is first changed to the maximal value θ max for a period of "to", then gradually decreases to the original value $\theta_o$ during the period "ta". As for this embodiment, it is possible to complete learning fast due to absence of absolute refractory period, when there is no steep incline in neurons ignition distribution.

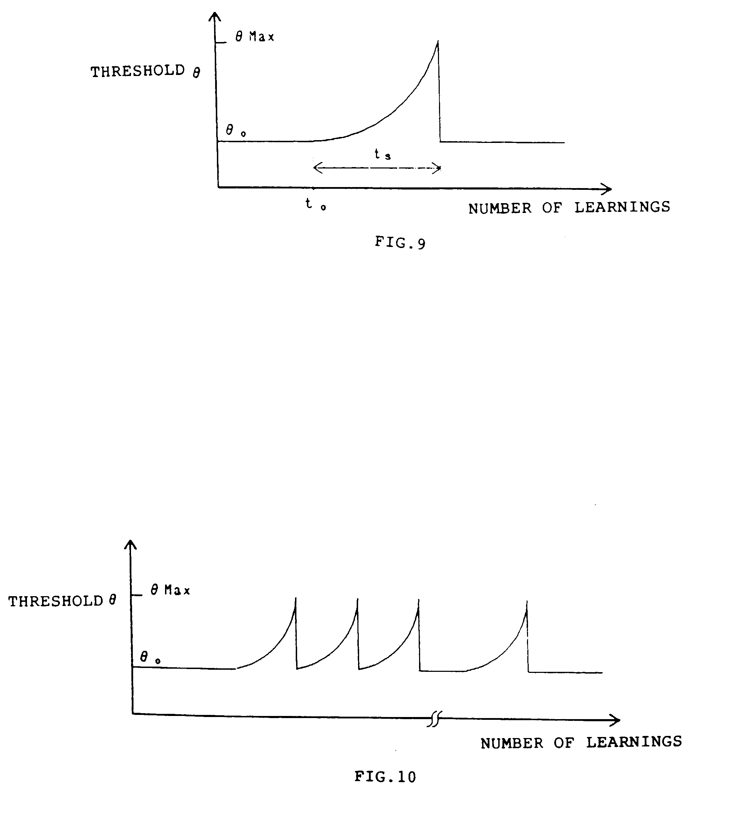

Fig.8 shows the threshold change according to the 4th embodiment. As for this embodiment, a plurality of refractory periods are repeatedly given, each of which is similar to that in Fig.7.

Fig.9 shows the threshold change according to the 5th embodiment. As for this embodiment, only relative refractory period is prepared in which threshold gradually increases. That is, threshold gradually increases during the period "ts" from a point "to". Once threshold reaches to the maximal value θ max, it immediately returns to the original value $\theta_o$. In view of above embodiment, balanced learning for improvement of total neural network can be expected.

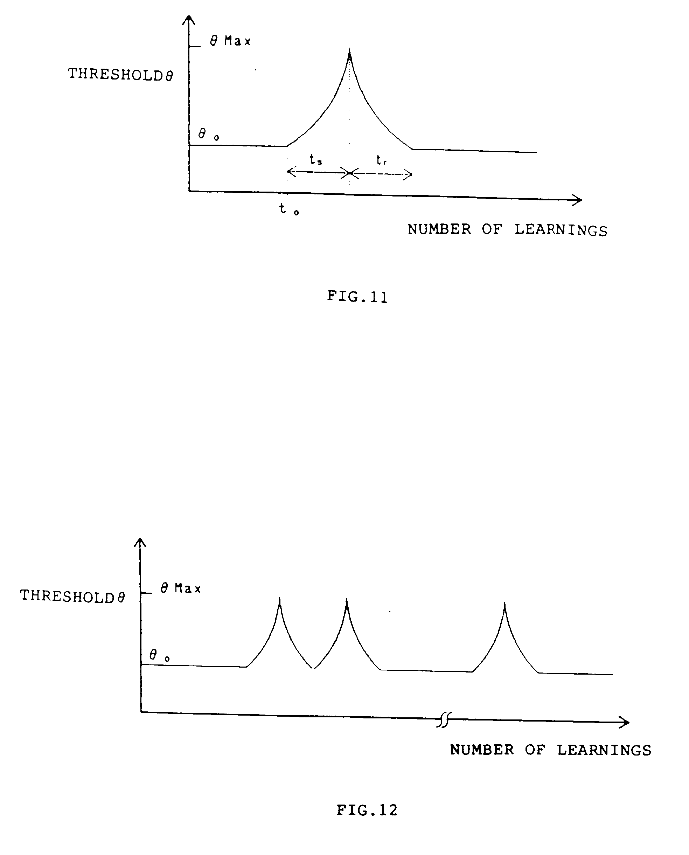

Fig.10 shows the threshold change according to the 6th embodiment. As for this embodiment, a plurality of cycles of relative refractory periods are given, each of which is similar to that in Fig.9.

Fig.11 shows the threshold change according to the 7th embodiment. As for this embodiment, both relative refractory period are prepared, in which threshold gradually increases and decreases. That is, threshold gradually increases during the period "ts" from the point "to". Once threshold reaches to the maximal value θ max, it immediately returns to the original value $\theta_o$. The same effect as that of the above embodiments can be expected.

Fig.12 shows the threshold change according to the 8th embodiment. As for this embodiment, the relative refractory period shown in Fig.11 is repeatedly occurs.

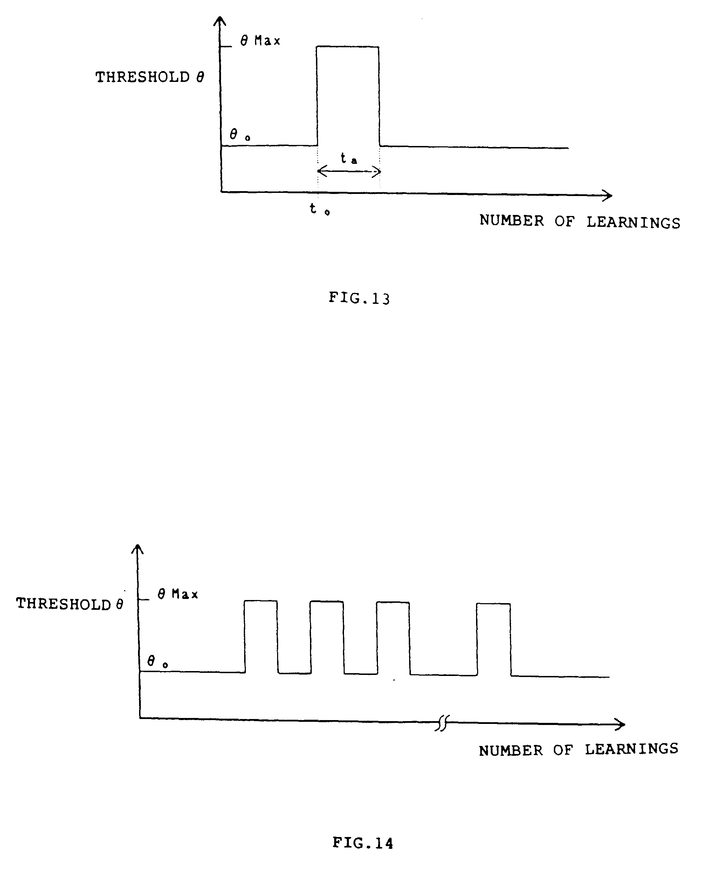

Fig.13 shows the threshold change according to the 9th embodiment. As for this embodiment, only absolute refractory period is prepared, where as relative refractory period is not. That is, threshold has the maximal value θ max during the period ta from the point to, then returns to the original value $\theta_o$. In this embodiment, balanced amendment learning for total neural network is performed in a short period of time.

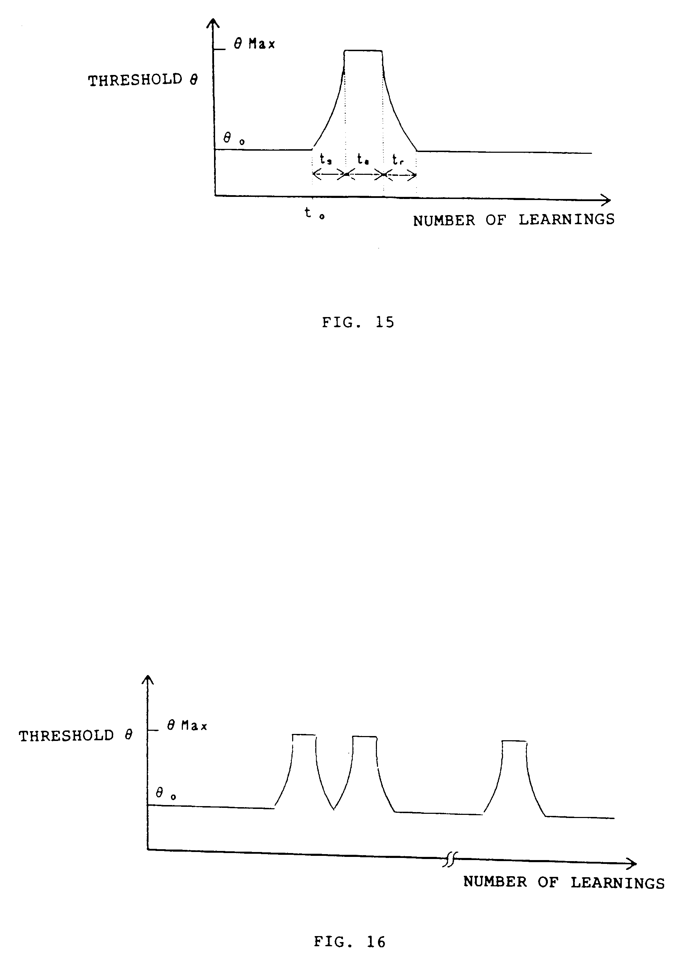

Fig.14 shows the threshold change according to the 10th embodiment. As for this embodiment, absolute refractory period described in Fig.13 occurs repeatedly.

Fig.15 shows the threshold change according to the 11th embodiment. As for this embodiment, relative refractory period, absolute refractory period in which threshold gradually increases, and relative refractory period in which threshold gradually decreases are prepared. That is, threshold gradually increases to the maximal value θ max during the period of "ts" from the point "to", and the maximal value θ max is maintained during the period "to", then gradually decreases to original value $\theta_o$ during the period "tr". In view of above embodiment, balanced amendment learning for total neural network is possible.

Fig.16 shows the threshold change according to the 12th embodiment. As for this embodiment, refractory period as it is described in Fig.15 is repeatedly performed.

As mentioned above, the adaptation method of data processing according to the present invention has outstanding effect of escaping from partial local minimal for certain as following steps;

a threshold of neuron generating significant output at certain point is compulsorily changed to increase once to maximal value, then decreases to the value at said point;

a predetermined weight is adjusted during the above compulsory change of threshold.

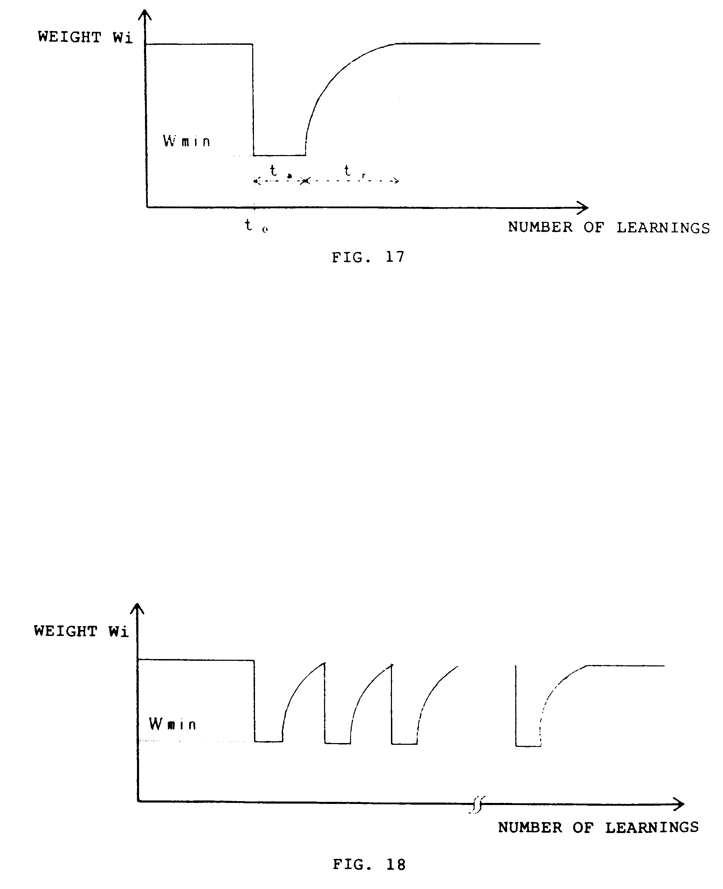

In the embodiments above, an effect equivalent to refractory period is obtained by changing threshold. A similar effect can be occurred by that weights W1 to Wn of a neuron which fire at a point of time "to" are decreased to the minimum Wmin, for example "0". Fig.17 shows the 13th embodiment of this type.

As shown in Fig.6, it is more certain to get out of a local minimum by giving a cycle of weight change. When the number of repetitions of weight change is too many, the convergence of learning is impeded. The convergence of learning is impeded, also when the cycle of weight change is given on the end period of learning.

Namely, the cycle of weight change is to be given appropriate number in the initial term of learning.

In addition to the above, adaptation is to be considered as to absolute refractory period of "ta", relative refractory period of "tr" and the balance of both periods.

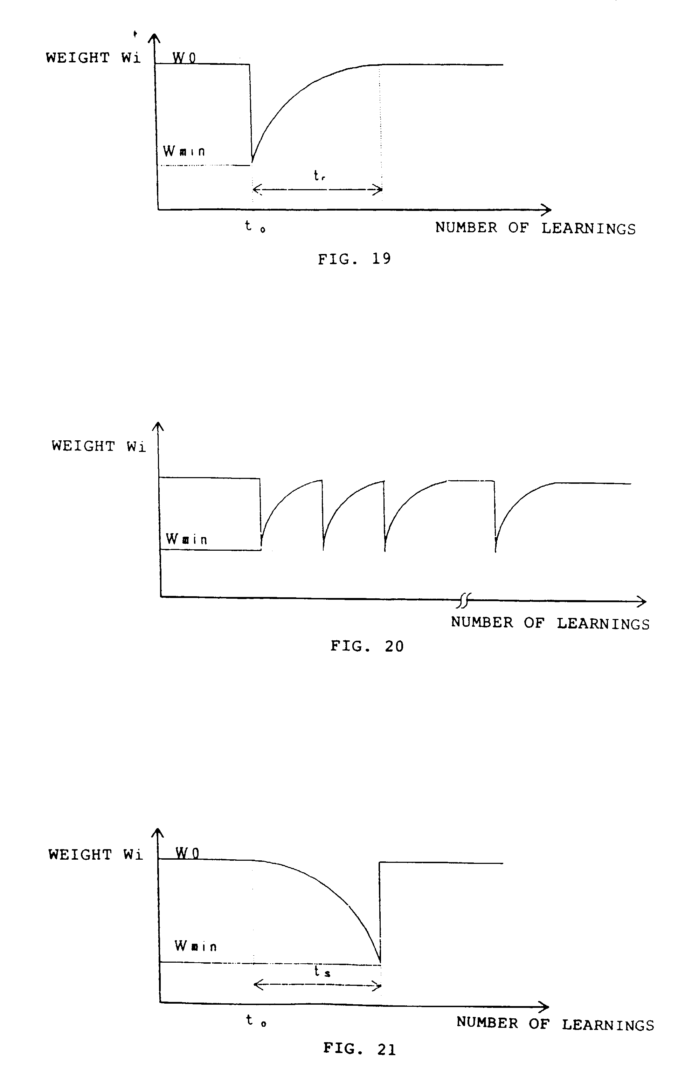

Fig.19 shows the weight change in the fifteenth embodiment. In this embodiment, absolute refractory period is not settled by only relative refractory period is settled. After weight wi takes the minimum value Wmin on "to", it immediately increases gradually to the beginning value wo during the period "tr". By the third embodiment, learning can be completed earlier because of absence of absolute refractory period, when there is no steep inclination of the distribution of neurons ignition distribution.

Fig.20 shows the weight change in the sixteenth embodiment. In this embodiment, the cycle of relative refractory periods only as in Fig.19 is given plural times.

Fig.21 shows the weight change of the seventeenth embodiment. In this embodiment, only relative refractory period is settled in which weight gradually decreases. The weight gradually decreases to reach the minimum value Wmin from "to" during the period "ts", then immediately increases to the beginning value wo. Balanced corrective learning is expected for whole of neural network by this embodiment.

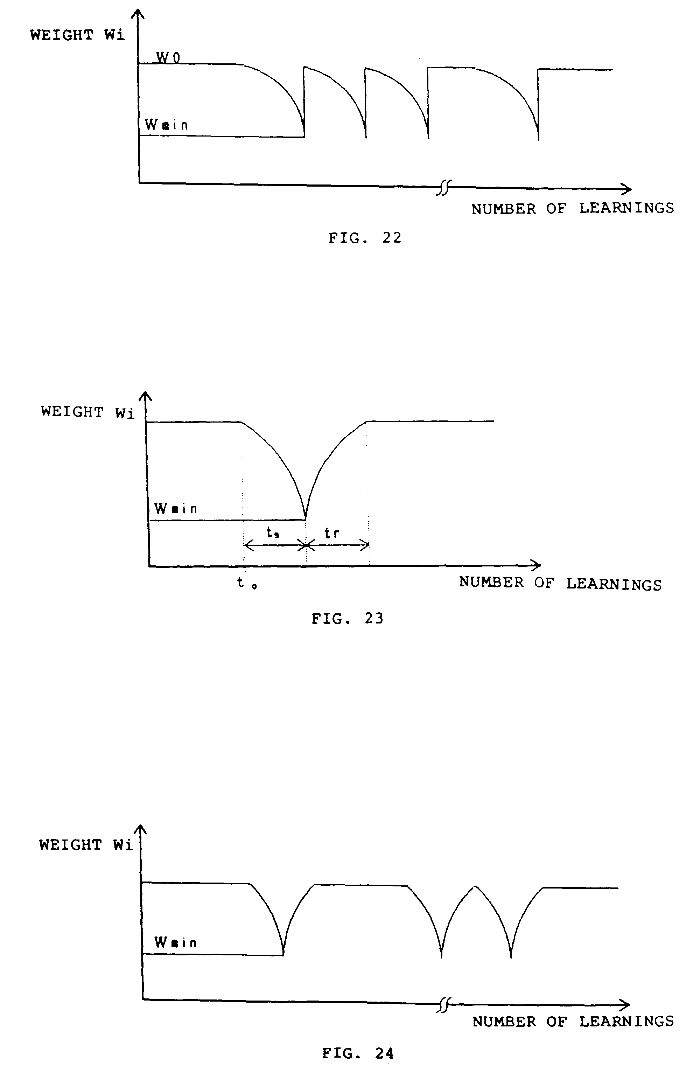

Fig.22 shows the weight change of the eighteenth embodiment. In this embodiment, the cycle of only relative refractory period is given in which weight gradually decreases as shown in Fig.9 plural times.

Fig.23 shows the weight change of the nineteenth embodiment. In this embodiment, two patterns of the relative refractory periods are settled in which weight gradually decreases and in which weight gradually increases. The weight gradually decreases to reach the minimum value Wmin from "to" during the period "ts", then immediately increases to the original value wo increasing gradually during the period "tr". This embodiment is also expected the same effectiveness of each embodiment above.

Fig.24 shows the weight change of the twentieth embodiment. In this embodiment, two patterns of the relative refractory periods are repeated in which weight gradually decreases and in which weight gradually increases as shown in Fig.13.

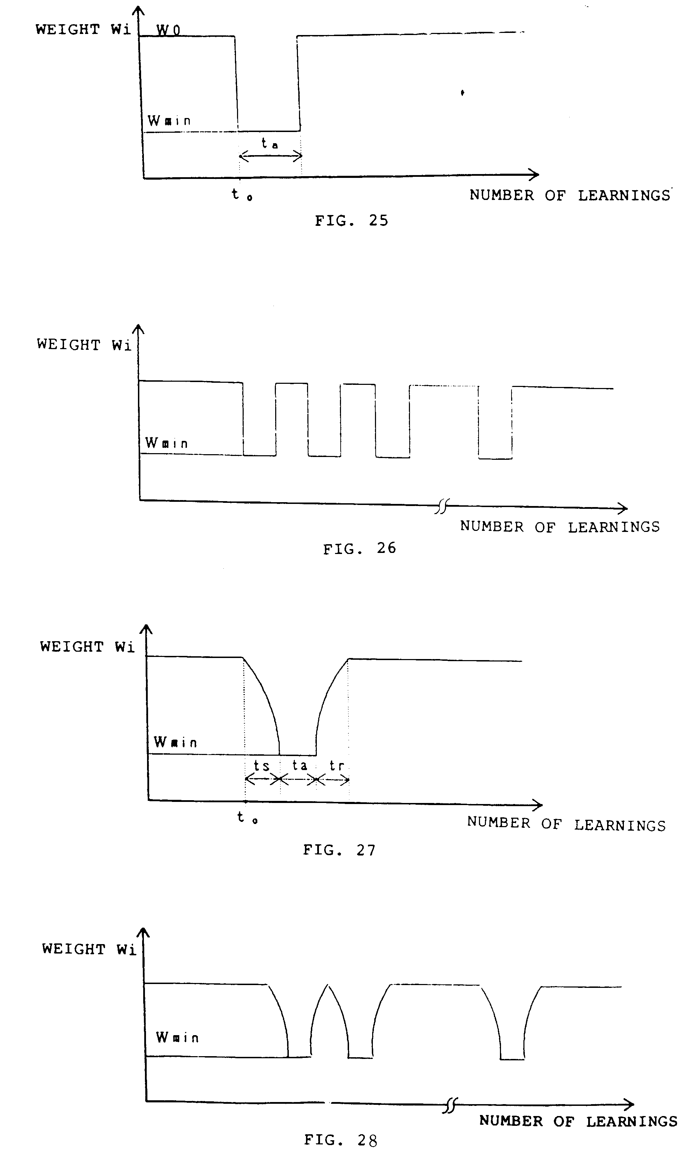

Fig.25 shows the weight change of the twenty-first embodiment. In this embodiment, relative refractory period is not settled but only absolute refractory period is settled. The weight value is the minimum Wmin from "to" during the period "ta", and returns to the original value wo. Balanced corrective learning for whole neural network is possible in short time by the present embodiment, too.

Fig.26 shows the weight change of the twenty-second embodiment. In this embodiment, absolute refractory period shown in Fig.13 is repeated.

Fig.27 shows the weight change of the twenty-third embodiment. In this embodiment, three patterns of periods are settled: relative refractory period in which weight gradually decreases, absolute refractory period, and relative refractory period in which weight gradually increases. Weight value reaches the minimum Wmin decreasing gradually during the period "ts"; it keeps the minimum Wmin during the period "to"; and it returns the original value wo increasing gradually during the period "tr". Balanced corrective learning for whole neural network is possible by the present embodiment, too.

Fig.28 shows the weight change of the twenty-fourth embodiment. In this embodiment, the cycle of refractory period shown in Fig.27 is repeated.

As mentioned above, an adaptation method of data processing system according to the present invention has superior effectiveness to get out of the local minimum certainly because of the steps of:

a) Giving certain inputs to the data processing system, a weight of neuron generated a useful output on a point is increased to the value on said point after once decreased to minimum value;
b) The weight is arranged during the minimum value.

It is described below the adaptive method to be executed in the beginning of learning so as to the adaptive method to be more effective one.

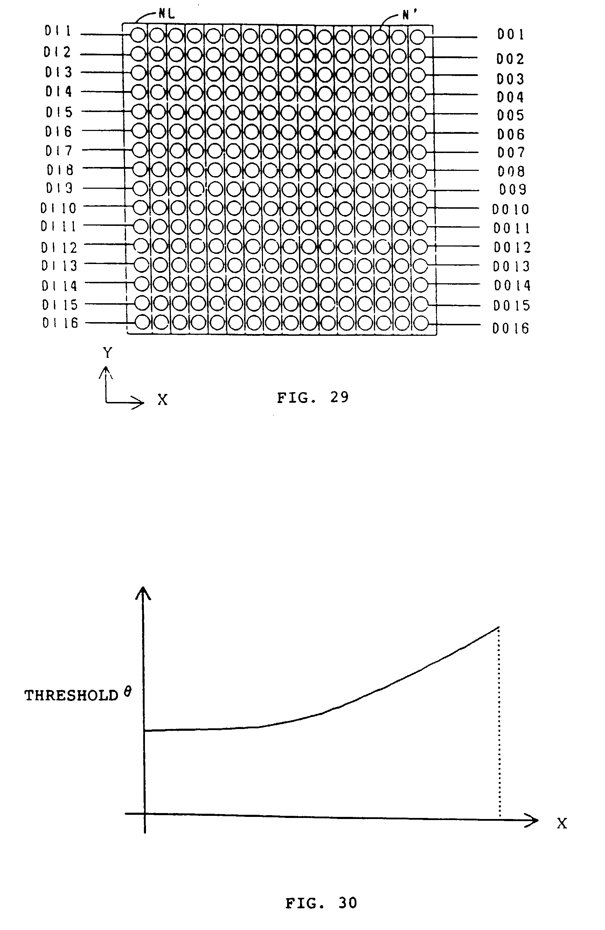

In Fig.29, a data processing system comprises plural neural layer NL in which plural neurons N are settled parallelly. The neural layer has the structure that the output of a neural layer becomes the input of the neural layer in the next stage.

The topology of a neural network can be defined in such a structure. The coordinate of each neuron can be specified as shown in Fig.29.

Here, settle the condition below. X-axis is settled in the direction from the input to the output and Y-axis to be settled along the longitudinal direction of each neural layer. The initial threshold distribution of neurons is settled as in Fig.30. In the distribution, neurons in the same layer have the same value, and the value increases as the X coordinate increases. The inclination of threshold's increase is smooth. During learning process, a weight of a synapse transmitting significant output is increased when valid or correct data is input to a neural network.

As to threshold distribution in Fig.30, only the neurons in the input side ignite first and gradually the ignition is spread out to the neurons in later steps. On this process, introducing the process of minimizing a weight, it is effective to increase the neurons to be ignited corresponding to a certain input in each neural layer. On the point that neural layer in the last step is ignited, many neurons contribute data processing and ignition pattern does not incline. Therefore, it is possible to prevent falling into local minimum.

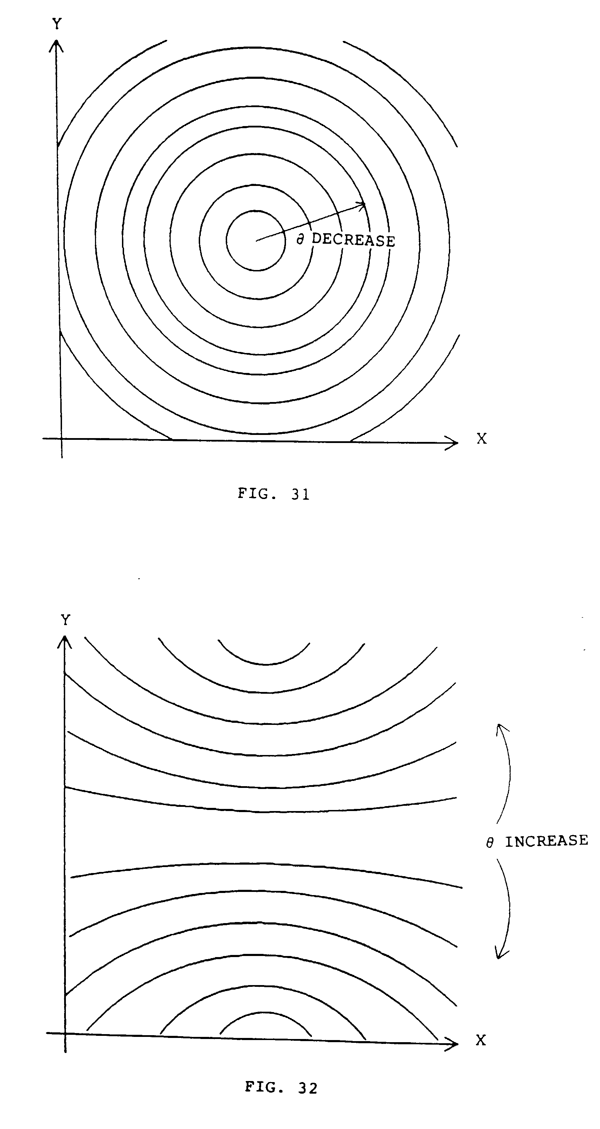

Fig.31 shows another embodiment of the initial threshold distribution. The threshold of neurons in the center of data processing system is large. As departing from the center of the data processing system, the threshold becomes smaller. Ignition pattern is generated around the base of the mountain of threshold at the beginning of learning. When threshold is changed to be maximum, the distribution of ignited neuron is spread gradually toward the center or the top of threshold mountain because of the existence of the neurons with rather lower threshold adjacent to igniting neuron. Through the processing, many neurons contribute data processing at the end of learning and ignition pattern does not incline. Therefor, it is possible to prevent a cave into local minimum.

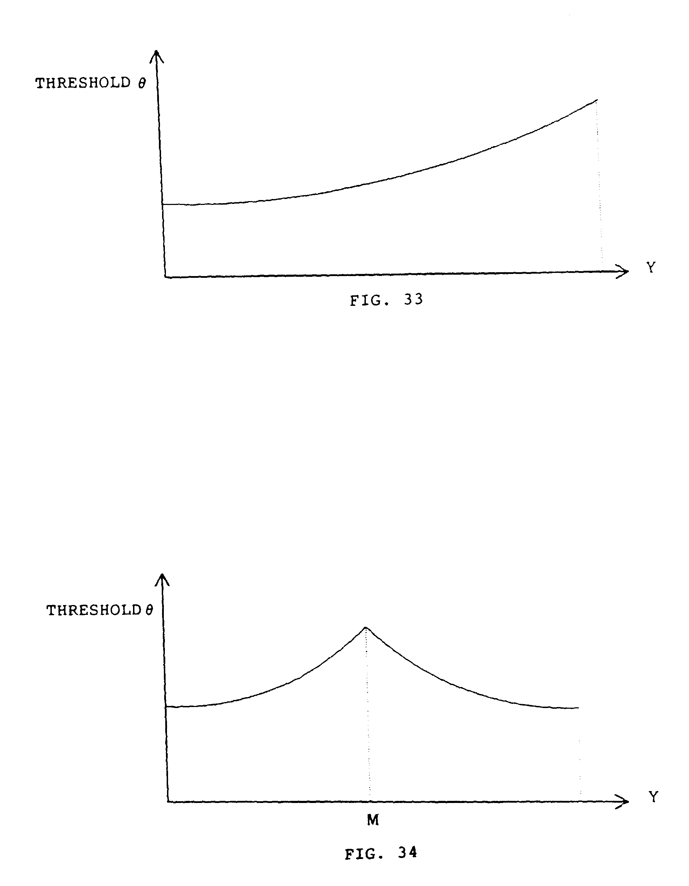

Fig.32 shows another embodiment of the initial threshold distribution in addition to Fig.31. The neuron's threshold at the middle of Y-axis is settled to be the minimum. It becomes larger toward the maximum and minimum of Y-axis with smooth inclination. The ignition pattern passing through or beside the middle of Y-axis is generated first in such a data processing system. When threshold is changed to be maximum, the distribution of igniting neurons is spread gradually toward both of the maximum and minimum of Y-axis because of the existence of the neurons with rather lower threshold adjacent to neurons igniting. Through the processing, many neurons finally contribute data processing and ignition pattern becomes flat. Therefore, it is possible to prevent the falling into local minimum.

Fig.33 shows the 4th embodiment. In this embodiment, unlike the 1st embodiment in Fig.30, thresholds for neurons in the same Y coordinate are equal for each neural layer, whereas threshold of neuron is heightened as Y coordinate increases with respect to the same neural layer. Here, the inclination on threshold's increase is smooth. As to threshold distribution in Fig.33, only neurons larger in Y coordinate ignite first and gradually the ignition is spread out to the neurons smaller in Y coordinate. When maximization of threshold is performed, the distribution of igniting neurons is spread gradually because of the existence of the neurons with rather lower threshold adjacent to neurons igniting. Through the processing, many neurons finally contribute data processing and ignition pattern becomes flat. Therefor, it is possible to prevent the falling into local minimum.

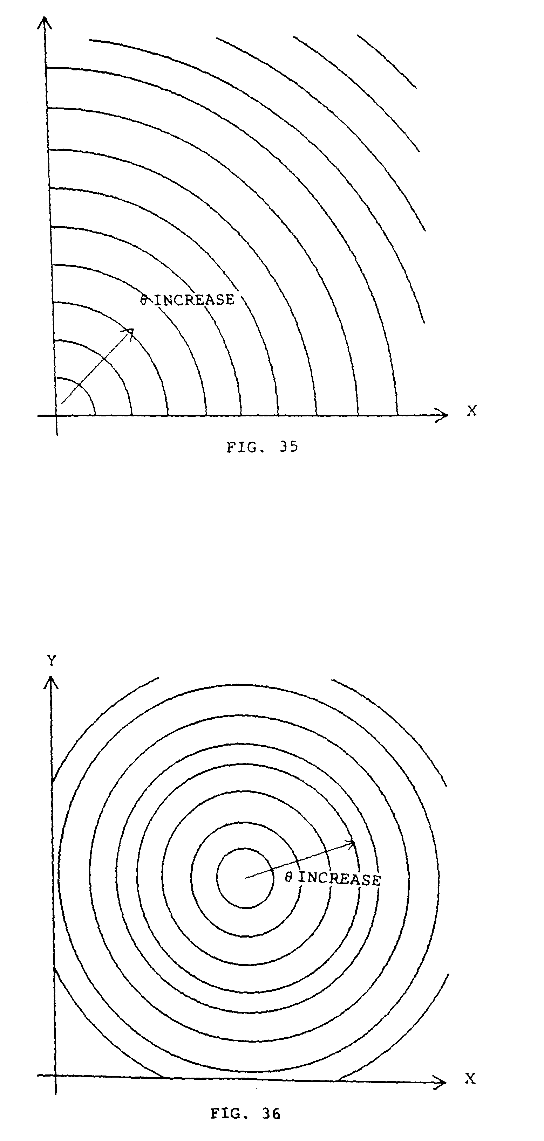

Fig.34 shows the 5th embodiment, thresholds for neurons of all neural layer in the same Y coordinate are equal, whereas threshold in the specific Y coordinate M (center, for example) is the maximum and decreases gradually as departing from the center. As to threshold distribution in Fig.34, only neurons at the maximum and minimum value side with respect to Y coordinate ignite first and gradually the ignition is spread out to the center. When maximization of threshold is performed, the distribution of igniting neurons is spread gradually because of the existence of the neurons with rather lower threshold adjacent to neurons igniting. Through the processing, many neurons finally contribute data processing and ignition pattern becomes flat. Therefore, it is possible to prevent the falling into local minimum.

Fig.35 shows the 6the embodiment. In this embodiment, the smaller the X and Y coordinate becomes, the smaller the threshold of neurons becomes, and the bigger the X and Y coordinate becomes, the smoother the threshold of neurons decreases. As to this threshold distribution, only neurons at small X and Y coordinate ignite first and gradually the ignition is spread out to the neurons at bigger end of X and Y coordinate. When maximization of threshold is performed, the distribution of igniting neurons is spread gradually because of the existence of the neurons with rather lower threshold adjacent to neurons igniting. Through the processing, many neurons finally contribute data processing and ignition pattern becomes flat. Therefore, it is possible to prevent the falling into local minimum.

Fig.36 shows the 7th embodiment of the initial threshold distribution. Threshold of center neuron is settled to the minimum. It increases as it becomes more distant from above center neuron. The ignition pattern is generated from center neuron at the beginning of learning. When maximization of threshold is performed, the distribution of igniting neurons is spread gradually because of the existence of the neurons with rather lower threshold adjacent to neurons igniting. Through the processing, many neurons finally contribute data processing and ignition pattern becomes flat. Therefore, it is possible to prevent the falling into local minimum.

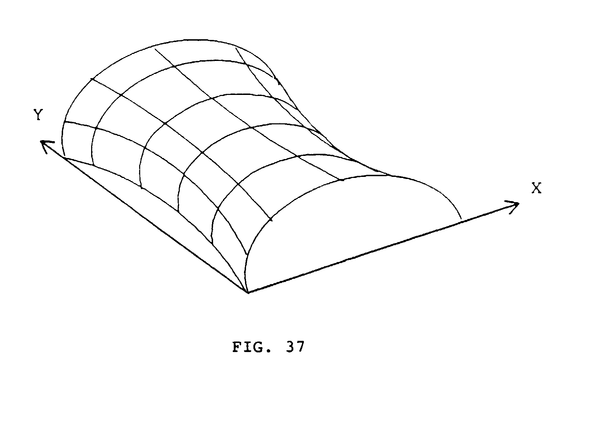

Fig.37 shows the 8th embodiment of the initial threshold distribution. Threshold, for example, becomes bigger as it approaches to the center in Y coordinate, whereas it, for example, becomes smaller as it approaches to the center in X coordinate. That is, the shape of threshold distribution is like a saddle.

The similar effect of the above each embodiment can be obtained by the present embodiment, too.

As to a data processing system according to the present invention, igniting neuron is spread during the learning, for modifying the inclination so as to give the smooth inclination to initial threshold distribution. As the result, it is possible to prevent inclined ignition pattern.

## Claims

1. Method for avoiding falling in local minima during learning of a neural network comprising neurons each of which igniting in accordance to a comparison between a sum of weighted inputs and a threshold value, wherein said weighting of inputs is changed in accordance with learning,
**characterized by the steps of:**

   determining a neuron which has generated a significant output at a certain time $t_o$,

   compulsorily increasing the threshold value for said determined neuron from a predetermined value ($\phi_o$) to a maximum value ($\phi_{max}$) and subsequently decreasing the threshold value again to the predetermined value ($\phi_o$), and

   continuing, during the time of compulsorily increasing the threshold value above the predetermined value, with learning of the neural network.

2. Method for avoiding falling in local minima during learning of a neural network comprising neurons each of which igniting in accordance to a comparison between a sum of weighted inputs and a threshold value, wherein said weighting of inputs is changed in accordance with learning,
**characterized by the steps of:**

   determining a neuron which has generated a significant output at a certain time $t_o$,

   compulsorily decreasing the weight of said determined neuron from a particular value present during said time $t_o$ to a minimum value ($W_{min}$) and subsequently increasing the weight again to said particular value ($W_i$), and

   continuing, during the time of compulsorily decreasing the weight below the particular value, with learning of the neural network.

3. Method according to claim 1 or 2, wherein said steps are performed a plurality of times repeatedly.

4. Method according to claim 1, wherein said threshold is changed so as to obtain an effect equivalent to an absolute refractory period.

5. Method according to claim 1, wherein said threshold is changed so as to obtain an effect equivalent to a relative refractory period.

6. Method according to claim 1, wherein said threshold is changed so as to obtain an effect equivalent to both an absolute and relative refractory period.

7. Method according to claim 5 or 6, wherein said relative refractory period consists of an increasing period and decreasing period of threshold.

8. Method according to claim 2, wherein said weight is changed so as to obtain an effect equivalent to an absolute refractory period.

9. Method according to claim 2, wherein said weight is changed so as to obtain an effect equivalent to a relative refractory period.

10. Method according to claim 2, wherein said weight is changed so as to obtain an effect equivalent to both an absolute and relative refractory period.

11. Method according to claim 9 or 10, wherein said relative refractory period consists of an increasing period and decreasing period of weight.

12. Method according to claim 1 or 2, wherein a smooth inclination is given to said threshold distribution at the initial condition.

13. Method according to claim 12, wherein said threshold increases from an input side to an output side in said data processing system.

14. Method according to claim 12, wherein said threshold decreases from a center portion to a peripheral portion of said data processing system.

15. Method according to claim 12, wherein said threshold increases from a middle portion to both sides in the lateral direction of said data processing system.

16. Method according to claim 12, wherein said threshold increases from a center portion to peripheral portion of said data processing system.

17. Method according to claim 12, wherein said threshold increases laterally from one side to the other of said data processing system.

18. Method according to claim 12, wherein said threshold decreases from a middle portion to both sides in the lateral direction of said data processing system.

19. Method according to claim 12, wherein said threshold increases from one end of an input side to the opposite end of an output side.

20. Method according to claim 12, wherein said threshold has saddle-like distribution with center line passing along lateral direction through a center portion of said data processing system.

**Patentansprüche**

1. Verfahren zur Vermeidung, in örtliche Minima während des Lernens eines Neuronennetzes zu fallen, das Neuronen umfaßt, von denen jedes nach Maßgabe eines Vergleichs zwischen einer Summe gewichteter Eingänge und einem Schwellenwert zündet, wobei die genannte Gewichtung der Eingänge nach Maßgabe des Lernens geändert wird, **gekennzeichnet durch die Schritte:**

   Bestimmen eines Neurons, das einen signifikanten Ausgang zu einer gewissen Zeit $t_0$ erzeugt hat,

   zwangsweises Erhöhen des Schwellenwerts für das genannte bestimmte Neuron von einem vorbestimmten Wert ($\theta_0$) auf einen maximalen Wert ($\theta_{max}$) und nachfolgendes Verringern des Schwellenwerts wiederum auf den vorbestimmten Wert ($\theta_0$), und

   Fortfahren mit dem Lernen des Neuronennetzes während der Zeit der zwangsweisen Erhöhung des Schwellenwerts über den vorbestimmten Wert.

2. Verfahren zur Vermeidung, in örtliche Minima während des Lernens eines Neuronennetzes zu fallen, das Neuronen umfaßt, von denen jedes nach Maßgabe eines Vergleichs zwischen einer Summe gewichteter Eingänge und einem Schwellenwert zündet, wobei die genannte Gewichtung der Eingänge nach Maßgabe des Lernens geändert wird, **gekennzeichnet durch die Schritte:**

   Bestimmen eines Neurons, das einen signifikanten Ausgang zu einer gewissen Zeit $t_0$ erzeugt hat,

   zwangsweises Verringern des Gewichts für das genannte bestimmte Neuron von einem bestimmten Wert, der während der genannten Zeit $t_0$ vorliegt, auf einen minimalen Wert ($W_{min}$) und nachfolgendes Erhöhen des Gewichts wiederum auf den bestimmten Wert ($W_i$), und

   Fortfahren mit dem Lernen des Neuronennetzes während der Zeit der zwangsweisen Verringerung des Gewichts unter den vorbestimmten Wert.

3. Verfahren gemäß Anspruch 1 oder 2, wobei die genannten Schritte eine Mehrzahl von Malen wiederholt ausgeführt werden.

4.  Verfahren gemäß Anspruch 1, worin die genannte Schwelle geändert wird, um ein wirksames Äquivalent zu einer absoluten Widerstandsperiode zu erhalten.

5.  Verfahren gemäß Anspruch 1, worin die genannte Schwelle geändert wird, um ein wirksames Äquivalent zu einer relativen Widerstandsperiode zu erhalten.

6.  Verfahren gemäß Anspruch 1, worin die genannte Schwelle geändert wird, um ein wirksames Äquivalent für eine absolute und eine relative Widerstandsperiode zu erhalten.

7.  Verfahren gemäß Anspruch 5 oder 6, wobei die genannte relative Widerstandsperiode aus einer Zunahmeperiode und einer Abnahmeperiode der Schwelle besteht.

8.  Verfahren gemäß Anspruch 2, wobei das genannte Gewicht geändert wird, um ein wirksames Äquivalent für eine absolute Widerstandsperiode zu erhalten.

9.  Verfahren gemäß Anspruch 2, wobei das genannte Gewicht geändert wird, um ein wirksames Äquivalent für eine relative Widerstandsperiode zu erhalten.

10.  Verfahren gemäß Anspruch 2, wobei das genannte Gewicht geändert wird, um ein wirksames Äquivalent für eine absolute und eine relative Widerstandsperiode zu erhalten.

11.  Verfahren gemäß Anspruch 9 oder 10, wobei die genannte relative Widerstandsperiode aus einer zunehmenden Periode und einer abnehmenden Periode des Gewichts besteht.

12.  Verfahren gemäß Anspruch 1 oder 2, wobei der genannten Schwellenverteilung im Anfangszustand eine glatte Neigung gegeben wird.

13.  Verfahren gemäß Anspruch 12, wobei die genannte Schwelle von einer Eingangsseite zu einer Ausgangsseite in dem genannten Datenverarbeitungssystem zunimmt.

14.  Verfahren gemäß Anspruch 12, wobei die genannte Schwelle von einem Mittelabschnitt zu einem Umfangsabschnitt des genannten Datenverarbeitungssystem zunimmt.

15.  Verfahren gemäß Anspruch 12, wobei die genannte Schwelle von einem Mittelabschnitt nach beiden Seiten in der seitlichen Richtung des genannten Datenverarbeitungssystem zunimmt.

16.  Verfahren gemäß Anspruch 12, wobei die genannte Schwelle von einem mittleren Abschnitt zu einem Umfangsabschnitt des genannten Datenverarbeitungssystem zunimmt.

17.  Verfahren gemäß Anspruch 12, wobei die genannte Schwelle seitlich von einer Seite zu der anderen des genannten Datenverarbeitungssystem zunimmt.

18.  Verfahren gemäß Anspruch 12, wobei die genannte Schwelle von einem mittleren Abschnitt nach beiden Seiten in der seitlichen Richtung des genannten Datenverarbeitungssystems zunimmt.

19.  Verfahren gemäß Anspruch 12, wobei die genannte Schwelle von einem Ende einer Eingangsseite zu dem gegenüberliegenden Ende einer Ausgangsseite zunimmt.

20.  Verfahren gemäß Anspruch 12, wobei die genannte Schwelle eine sattelförmige Verteilung aufweist, wobei die Mittellinie entlang der seitlichen Richtung durch einen Mittelabschnitt des genannten Datenverarbeitungssystems geht.

**Revendications**

1.  Procédé pour éviter de tomber dans des minimums locaux pendant l'apprentissage d'un réseau neural comprenant des neurones, chacun s'allumant conformément à une comparaison entre une somme d'entrées pondérées et une valeur de seuil, ladite pondération des entrées étant modifiée conformément à l'apprentissage, caractérisé par les étapes suivantes :

détermination d'un neurone qui a produit une sortie significative à un certain temps $t_0$.

augmentation obligatoire de la valeur de seuil pour ledit neurone déterminé d'une valeur prédéterminée ($\varphi_0$) à une valeur maximale ($\varphi_{max}$) et, ensuite, diminution de la valeur de seuil de nouveau à la valeur prédéterminée ($\varphi_0$), et

continuation, pendant la durée de l'augmentation obligatoire de la valeur du seuil au-dessus de la valeur prédéterminée, de l'apprentissage du réseau neural.

2. Procédé pour éviter de tomber dans des minimums locaux pendant l'apprentissage d'un réseau neural comprenant des neurones dont chacun s'allume conformément à une comparaison entre une somme d'entrées pondérées et une valeur de seuil, ladite pondération des entrées étant modifiée conformément à l'apprentissage, caractérisé par les étapes suivantes :

détermination d'un neurone qui a produit une sortie significative à un certain temps $t_0$,

diminution obligatoire du poids dudit neurone déterminé d'une valeur particulière présente pendant ledit temps $t_0$ à une valeur minimale ($W_{min}$) et, ensuite, augmentation du poids de nouveau à ladite valeur particulière ($W_i$), et

continuation, pendant la durée de diminution obligatoire du poids au-dessous de la valeur particulière, de l'apprentissage du réseau neural.

3. Procédé selon la revendication 1 ou 2, dans lequel lesdites étapes sont effectuées une pluralité de fois de manière répétée.

4. Procédé suivant la revendication 1, dans lequel ledit seuil est modifié de manière à obtenir un effet équivalent à une période réfractaire absolue.

5. Procédé selon la revendication 1, dans lequel ledit seuil est modifié de manière à obtenir un effet équivalent à une période réfractaire relative.

6. Procédé selon la revendication 1, dans lequel ledit seuil est modifié de manière à obtenir un effet équivalent à une période réfractaire absolue ainsi qu'à une période réfractaire relative.

7. Procédé selon la revendication 5 ou 6, dans lequel ladite période réfractaire relative consiste en une période d'augmentation et une période de diminution du seuil.

8. Procédé selon la revendication 2, dans lequel ledit poids est modifié de manière à obtenir un effet équivalent à une période réfractaire absolue.

9. Procédé selon la revendication 2, dans lequel ledit poids est modifié de manière à obtenir un effet équivalent à une période réfractaire relative.

10. Procédé selon la revendication 2, dans lequel ledit poids est modifié de manière à obtenir un effet équivalent à une période réfractaire absolue ainsi qu'à une période réfractaire relative.

11. Procédé selon la revendication 9 ou 10, dans lequel ladite période réfractaire relative consiste en une période d'augmentation et une période de diminution du poids.

12. Procédé selon la revendication 1 ou 2, dans lequel une inclinaison régulière est donnée à ladite distribution de seuil à la condition initiale.

13. Procédé selon la revendication 12, dans lequel ledit seuil augmente d'un côté d'entrée à un côté de sortie dans ledit système de traitement de données.

14. Procédé selon la revendication 12, dans lequel ledit seuil diminue d'une partie centrale à une partie périphérique dudit système de traitement de données.

15. Procédé selon la revendication 12, dans lequel ledit seuil augmente d'une partie médiane aux deux côtés dans la direction latérale dudit système de traitement de données.

16. Procédé selon la revendication 12, dans lequel ledit seuil augmente d'une partie centrale à la partie périphérique dudit système de traitement de données.

17. Procédé selon la revendication 12, dans lequel ledit seuil augmente latéralement d'un côté à l'autre dudit système de traitement de données.

18. Procédé selon la revendication 12, dans lequel ledit seuil décroît d'une partie médiane aux deux côtés dans la direction latérale dudit système de traitement de données.

19. Procédé selon la revendication 12, dans lequel ledit seuil augmente d'une extrémité d'un côté d'entrée à l'extrémité opposée d'un côté de sortie.

20. Procédé selon la revendication 12, dans lequel ledit seuil a une répartition en forme de selle, dont l'axe central passe le long de la direction latérale par une partie centrale dudit système de traitement de données.

STARNDARD IDENTIFICATION
RATIO TP

NUMBER OF LEARNINGS

FIG.1

STANDARD IDENTIFICATION
RATIO TP

NUMBER OF LEARNINGS

FIG.2

STANDARD IDENTIFICATION
RATIO TP

NUMBER OF LEARNINGS

FIG.3

FIG.4

FIG.5

FIG.6

FIG.7

FIG.8

FIG.9

FIG.10

FIG.11

FIG.12

FIG.13

FIG.14

FIG. 15

FIG. 16

WEIGHT Wi

W min

t a  t r

t o

NUMBER OF LEARNINGS

FIG. 17

WEIGHT Wi

W min

NUMBER OF LEARNINGS

FIG. 18

FIG. 19

FIG. 20

FIG. 21

WEIGHT Wi

W 0

W min

NUMBER OF LEARNINGS

FIG. 22

WEIGHT Wi

W min

$t_s$

$t_r$

$t_o$

NUMBER OF LEARNINGS

FIG. 23

WEIGHT Wi

W min

NUMBER OF LEARNINGS

FIG. 24

21

FIG. 25

FIG. 26

FIG. 27

FIG. 28

DI1 — NL ... N' — DO1
DI2 — DO2
DI3 — DO3
DI4 — DO4
DI5 — DO5
DI6 — DO6
DI7 — DO7
DI8 — DO8
DI3 — DO9
DI10 — DO10
DI11 — DO11
DI12 — DO12
DI13 — DO13
DI14 — DO14
DI15 — DO15
DI16 — DO16

Y

X

FIG. 29

THRESHOLD $\theta$

X

FIG. 30

FIG. 31

FIG. 32

FIG. 33

FIG. 34

FIG. 35

FIG. 36

FIG. 37